# EUROPÄISCHE PATENTSCHRIFT

(11) **EP 0 491 339 B1**
(45) Veröffentlichungstag und Bekanntmachung des Hinweises auf die Patenterteilung: **18.11.1993**
(21) Anmeldenummer: 91121560.6
(22) Anmeldetag: 16.12.1991
(51) Int. Cl.: B01D 5/00, F26B 21/14

(54) **Verfahren und Vorrichtung zur Rückgewinnung von Lösungsmitteln**
Method and apparatus for the recuperation of solvents
Procédé et dispositif de récupération de solvants

(30) Priorität: 17.12.1990 DE 4040389
(43) Veröffentlichungstag der Anmeldung: 24.06.1992
(73) Patentinhaber: HERCO-KÜHLTECHNIK HERMANNS & CO. GMBH, D-46474 Wesel (DE); AIR PRODUCTS GMBH, D-45527 Hattingen (DE)
(72) Erfinder: Hermanns, Peter, Dr. rer. nat., W-4230 Wesel (DE); Hermanns, Klaus, Dr. rer. nat., W-4224 Hünxe 2 (DE); Karthaus, Michael, Dipl.-Ing., W-4040 Neuss (DE)
(74) Vertreter: Schwabe - Sandmair - Marx

(56) Entgegenhaltungen:
- EP-A- 0 094 172
- US-A- 4 223 450

## Beschreibung

Die Erfindung betrifft ein Verfahren und eine Vorrichtung zur Vermeidung oder Verringerung von störfallbedingten Zeitverzögerungen bei der Lösungsmittelrückgewinnung aus Fertigungsprozessen.

Bei vielen industriellen Prozessen, beispielsweise beim Beschichten und Trocknen von Bändern, Folien usw. wie Audio- oder Videobändern, entstehen Lösungsmitteldämpfe, die aufgefangen und rückgewonnen werden müssen, da sie meist in Mischung mit Luft explosibel und fast immer auch gesundheitsschädlich sind.

Aus der DE-A-30 42 082 ist ein Verfahren zur Wiedergewinnung von Lösungsmitteln bekannt geworden, bei dem die Lösungsmitteldämpfe enthaltende Abluft, beispielsweise aus solch einem Trockner, über Adsorptionsmittelchargen geleitet wird. Die durch Adsorption der Lösungsmittel gereinigte Abluft wird anschließend an die Atmosphäre abgegeben. Ein zweiter Kreislauf mit Inertgas dient der Desorption der lösungsmittelbeladenen Adsorptionsmittelchargen.

Durch die DE-A-39 07 437 wird ein Verfahren zur Entfernung von Lösungsbestandteilen aus der Abluft von Lackieranlagen und dergleichen offenbart, bei dem die Abluft aus solch einer Lackieranlage in zwei Teilströme unterteilt wird. Ein Teilstrom wird der Anlage nach erneutem Aufheizen wieder direkt zugeführt, während der andere Teilstrom erst nach erfolgter Reinigung in die Anlage zurückgeführt wird.

Zum sicheren Betrieb dieser Anlagen ist aufgrund der Verwendung von Luft als Spülgas ganz besonders darauf zu achten, daß die Konzentration der Lösungsmitteldämpfe in solch einer Anlage so gering bleibt, daß die Zünd- bzw. Explosionsgrenze des Gemisches aus Luft und Lösungsmittel nicht erreicht wird. Es müssen daher große Luftmengen durch die Anlage geführt und nach dem Absaugen aus der Anlage von den mitgeführten Lösungsmitteldämpfen befreit werden. Darüberhinaus wird mit der zugeführten Luft Feuchtigkeit in die Anlage eingeschleppt, die oft in höherer Menge vorliegt als das eigentliche Lösungsmittel. Dies führt bei allen Abluftreinigungsverfahren dieser Art zu Verfahrensschwierigkeiten und zusätzlichem Anlage- bzw. Energieaufwand.

Ein weiteres Verfahren zur Reinigung eines Trägergases durch Adsorption der darin enthaltenen Lösungsmitteldämpfe ist aus der DE-C-38 10 705 bekannt. Auch hier wird das gereinigte Abgas an die Umgebung abgegeben.

Um jedoch die Forderungen einer hohen Betriebssicherheit und eines rationellen Energieeinsatzes erfüllen zu können, werden die Trockner, oft auch die Beschichter gekapselt, gegen den Zutritt von Luft abgeschirmt und unter einer inerten Atmosphäre z.B. Stickstoff gehalten. Gleichzeitig werden die Schleusen mit Inertgas versorgt.

Entsprechende Anlagen sind in der Fachzeitschrift "cav", Ausgabe 1988/9 auf den Seiten 30, 32, 34 und 39 sowie in der Fachzeitschrift "Technische Rundschau", Ausgabe 23/87 auf den Seiten 46 und 47, beschrieben. Bei dem aus der "Technischen Rundschau" bekannt gewordenen Verfahren zum "Lösungsmittelrecycling auf Inertgasbasis" wird das aus der Anlage abgezogene Gemisch aus Lösungsmittel und Inertgas in einem Primärkreislauf über eine sogenannte Rückgewinnung mit Rekuperator und Kühler geführt und das von Lösungsmittelbestandteilen befreite Inertgas wieder der Anlage zugeführt. Über einen weiteren Kreislauf, dem sogenannten Sekundärkreislauf, werden die Schleusen, durch die die Anlage von der Umgebungsluft gekapselt ist, ebenfalls mit gereinigtem Inertgas versorgt.

Eine moderne Lösungsmittelrückgewinnungsanlage, wie sie beispielsweise aus der älteren europäischen Patentanmeldung 90 116 885.5 hervorgeht, hat deshalb sogar zwei zum Teil voneinander unabhängige Kreisläufe, nämlich
- einen Trägergaskreislauf, aus dem das Lösungsmittel auskondensiert und das gereinigte Trägergas wieder der Fertigungsanlage zugeführt wird, und
- einen Tieftemperaturteil, mit dem die Schleusen der Fabrikationsanlage, beispielsweise eines Trockners, versorgt werden.

In der laufenden Fertigung ergeben sich unliebsame Zeitverzögerungen immer dann, wenn z.B. aufgrund eines Bahnrisses der Betrieb des Trockners unterbrochen werden muß, um die Anlage für die Durchführung von Reparaturmaßnahmen zu öffnen. Das ist aus sicherheitstechnischen Gründen nur möglich, wenn durch die Lösungsmittelrückgewinnungsanlage der Lösungsmittelgehalt in der Trockneratmosphäre soweit abgebaut ist, daß auch bei Mischung mit der Umgebungsluft keine Explosionsgefahr mehr besteht.

Die hierfür erforderliche Zeit wird im wesentlichen von der Gasdurchflußkapazität und somit der Kälteleistung des Tieftemperaturteils bestimmt. Der Tieftemperaturteil ist jedoch nur für seine originäre Bestimmung, die Versorgung der Schleusen mit dem Trägergas, ausgelegt.

Durch die EP-A-0 094 172 wird ein Verfahren gelehrt, bei dem im Falle einer Sauerstoffkontamination eines Behandlungsofens der Kreislauf zur Rückgewinnung von in dem Ofen freigesetztem Lösungsmittel und der Kreis zur Versorgung der Schleusen des Ofens abgeschaltet und zur Behebung des Störfalls über eine separate Zuleitung reiner Stickstoff in den Ofen geführt und gleichzeitig über eine separate Ableitung Ofenatmosphäre abgelassen werden. Nach diesem Verfahren erfolgt die Notspülung des Ofens unabhängig von der Lösungsmittelrückgewinnung. Der Ofen wird während des Spülens sogar von eventuell vorgeschalteten bzw. nachgeschalteten Öfen isoliert. Während der Notspülung erfolgt auch keine Lösungsmittelrückgewinnung.

Es ist die Aufgabe der Erfindung, ein Verfahren und eine Vorrichtung der angegebenen Art zu schaffen, wodurch die obigen Nachteile weitgehend vermieden werden können; insbesondere sollen die Unterbrechungszeiten der laufenden Fertigung bei auftretenden Störungen in der Fertigungsanlage so kurz wie möglich gehalten werden, indem die Lösungsmittelkonzentration innerhalb der Anlage rasch abgesenkt wird.

Diese Aufgabe wird durch den Gegenstand der Ansprüche 1 und 12 gelöst.

Zweckmäßige Ausgestaltungen werden durch die Merkmale der Unteransprüche definiert.

Der Grundgedanke der Erfindung ist es, mit einer Lösungsmittelrückgewinnunganlage sowohl im Normalbetrieb einer Fertigungsanlage das Lösungsmittel aus dem Trägergas/Lösungsmittel-Gemisch zurückzugewinnen als auch im Falle einer Betriebsstörung dieser Fertigungsanlage den Lösungsmittelgehalt des Gemisches sehr rasch soweit zu senken, daß das gereinigte Trägergas auch an die Umgebung abgegeben werden kann.

Durch die Einführung eines weiteren Kreises mit einer Leitung für die Zuführung reinen Trägergases zur Fertigungsanlage und einer Leitung für die Entnahme von Trägergas/Lösungsmittel-Gemisch aus der Fertigungsanlage kann die Reinigungskapazität einer Lösungsmittelrückgewinnungsanlage erweitert werden, ohne den Kreislauf für die Versorgung der Schleusen mit reinem Trägergas oder den Kreislauf für die Rückführung des gereinigten Trägergases zur Fertigungsanlage für den Störfall auslegen zu müssen. Andernfalls müßten deren Komponenten bezüglich des Normalbetriebes überdimensioniert werden, da die gewünschte rasche Senkung des Lösungsmittelgehaltes im Störfall höhere Gasdurchflußraten erfordert.

Die Integration dieses Kreises in die Lösungsmittelrückgewinnungsanlage erhöht die Sicherheit im Störfall, da dann auch bei der raschen Senkung des Lösungsmittelgehalts die Druckverhältnisse in der Fertigungsanlage so gesteuert und an den Druck innerhalb der Schleusen angepaßt werden können, daß deren Sperrwirkung erhalten bleibt.

Die Zufuhr des reinen Trägergases erfolgt vorzugsweise in der Nähe der Schleusen, um deren Absperrwirkung weiter zu verbessern.

Die Reinigungskapazität der Lösungsmittelrückgewinnungsanlage wird erfindungsgemäß durch einen weiteren Tieftemperaturteil erhöht, worin das der Anlage entzogene Gemisch aus Trägergas und Lösungsmittel von letzterem befreit wird.

Vorteilhaft wird zur Kühlung des Tieftemperaturteils der flüssige Stickstoff genutzt, der nach dem Durchlaufen eines Wärmetauschers in gasförmiger Form zur Fertigungsanlage geführt wird.

Um die Ansprechzeit des Kreises so kurz wie möglich zu halten, wird in einer besonders zweckmäßigen Ausführungsform der Erfindung der zweite, neu eingeführte Tieftemperaturteil ständig auf Arbeitstemperatur gehalten, vorteilhafterweise indem er mit dem ersten Tieftemperaturteil in einem gemeinsamen Gehäuse gegen Wärme isoliert untergebracht wird.

Durch Hinzufügen eines Schwellwertgebers für Sauerstoff wird die Erfindung darüberhinaus mit Vorteil zur Kontrolle des Sauerstoffgehaltes der Atmosphäre innerhalb der Fertigungsanlage eingesetzt. Zur Vermeidung einer Explosionsgefahr muß der Sauerstoffgehalt in der Atmosphäre der Fertigungsanlage ständig unter einem bestimmten Niveau, beispielsweise 5 Vol.-% gehalten werden. Indem der Zusatzkreis schon vor Erreichen dieses Wertes, etwa schon bei 4% Sauerstoffgehalt, seinen Betrieb aufnimmt, wird eine teure Unterbrechung der Produktion der Fertigungsanlage vermieden.

Da die Reinigung des Trägergas/Lösungsmittel-Gemisches während des normalen, d.h. störungsfreien Betriebes der Fertigungsanlage, voll ständig durch den Trägergaskreislauf und den Tieftemperaturteil der Lösungsmittelrückgewinnungsanlage erfolgt, bleibt der Zusatzkreis nur solange in Betrieb, bis die Anlage gefahrlos geöffnet werden kann oder der Sauerstoffgehalt auf das zulässige Niveau reduziert wurde.

Eine besonders zweckmäßige Ausführungsform der Erfindung wird im folgenden anhand der Figuren beschrieben. Dabei werden weitere Merkmale und Vorteile der Erfindung offenbart. Es zeigen:
- Fig. 1: den schematischen Aufbau einer Lösungsmittelrückgewinnungsanlage; und
- Fig. 2: die Lösungsmittelrückgewinnungsanlage nach Fig. 1 mit einem Zusatzkreis für die Zufuhr reinen Trägergases bzw. den Abzug für das Gemisch aus der Fertigungsanlage.

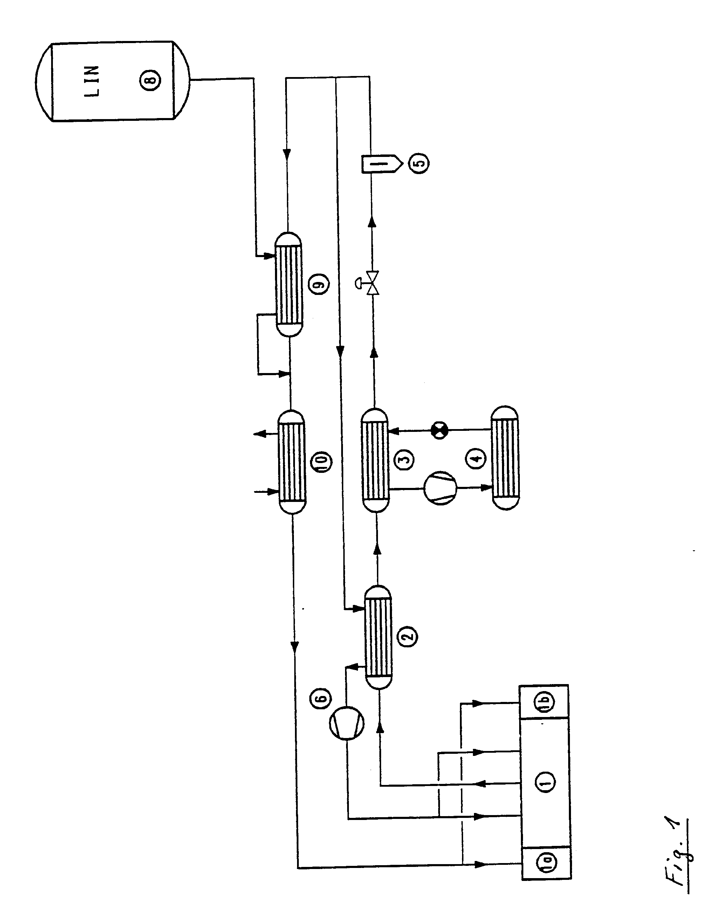

Der Grundaufbau einer Lösungsmittelrückgewinnungsanlage für die Entsorgung bzw. Versorgung eines Trockners 1 ist aus Fig. 1 ersichtlich. Der dort dargestellte Trockner 1 wird kontinuierlich oder chargenweise mit den zu trocknenden Artikeln, beispielsweise Video- oder Audiobändern beschickt und weist an seinem Einlaß und seinem Auslaß Schleusen 1a, 1b auf, die mit Stickstoff versorgt werden und deshalb einen Schutzvorhang zwischen der Lösungsmittelatmosphäre im Innern des Trockners 1 und der Umgebungsluft bilden.

Der im Trockner 1 anfallende lösungsmittelbeladene Stickstoff wird einem Wärmetauscher 2 der Lösungsmittelrückgewinnungsanlage zugeführt, wo dieses Gemisch vorgekühlt wird. Hochsiedende Komponenten werden in dem Wärmetauscher 2 entsprechend der Dampfdruckkurve kondensiert. Die Hauptaufgabe des Wärmetauschers 2 ist es jedoch, das gereinigte Trägergas vorzuwärmen, bevor es in die Fertigungsanlage geleitet wird, indem es in Wärmetausch mit dem abgezogenen Trägergas/Lösungsmittel-Gemisch tritt.

Das vorgekühlte und von hochsiedenden Komponenten befreite Gemisch Lösungsmittel/Stickstoff gelangt von dem Wärmetauscher 2 in einen Lösungsmittelkondensator 3, in dem der Hauptanteil des Lösungsmittels gegen Fremdkälte kondensiert wird. Die Fremdkälte wird hierbei von dem Verdampfer 3 einer Kältemaschine mit Kältemittelkondensator 4 geliefert.

Von dem Verdampfer 3 gelangt das Zweiphasengemisch flüssiges Lösungsmittel/gasförmiger Stickstoff in einen Lösungsmittelabscheider 5, wo das Lösungsmittel von dem Stickstoff getrennt wird; der vorgereinigte Stickstoff strömt von dem Abscheider 5 zurück in den Wärmetauscher 2 und wird dort im Wärmetausch mit dem aus dem Trockner 1 abgezogenen Gemisch Lösungsmittel/Stickstoff erwärmt. Ein Ventilator 6 saugt den Stickstoff aus dem Wärmetauscher 2 ab und führt ihn zurück in den Trockner 1.

Das im Abscheider 5 angefallene, zurückgewonnene Lösungsmittel wird in einem Behälter zwischengelagert und in der Regel mit einer Pumpe zum Tanklager für das Lösungsmittel zurückgepumpt (nicht dargestellt).

Damit in den Trockner 1 kein Sauerstoff einbrechen und das Lösungsmittel den Trockner 1 auch nicht verlassen kann, werden die Schleusen 1a, 1b des Trockners mit Stickstoff beaufschlagt, um in beiden Richtungen, nach draußen vor die Schleusen und nach innen in den Trockner, einen positiven Fluß zu erzeugen.

Der hierzu erforderliche Spülstickstoff wird, um einen positiven Fluß von den Schleusen 1a, 1b in den Trockner 1 zu gewährleisten, dem Stickstoff-Kreislauf ständig hinter dem Abscheider 5 entzogen; der Entnahmestickstoff enthält jedoch entsprechend der Dampfdruckkurve noch soviel Lösungsmittel, daß dieses Gasgemisch noch nicht in die Umgebung abgeleitet werden darf. Deshalb wird dieses Gasgemisch in einem Tieftemperaturteil 9 stark unterkühlt und damit soweit vom Lösungsmittel gereinigt, daß der Lösungsmittelanteil des Gasgemisches unterhalb der gesetzlichen Werte liegt. Die hierzu erforderliche Kälte wird durch flüssigen Stickstoff, der dem Tank 8 entnommen wird, zur Verfügung gestellt.

Der dem Tank 8 entnommene, nunmehr verdampfte Stickstoff wird gemeinsam mit dem gereinigten Entnahmestickstoff nach Erwärmung in einem weiteren Wärmetauscher 10 zu den Schleusen 1a, 1b geführt.

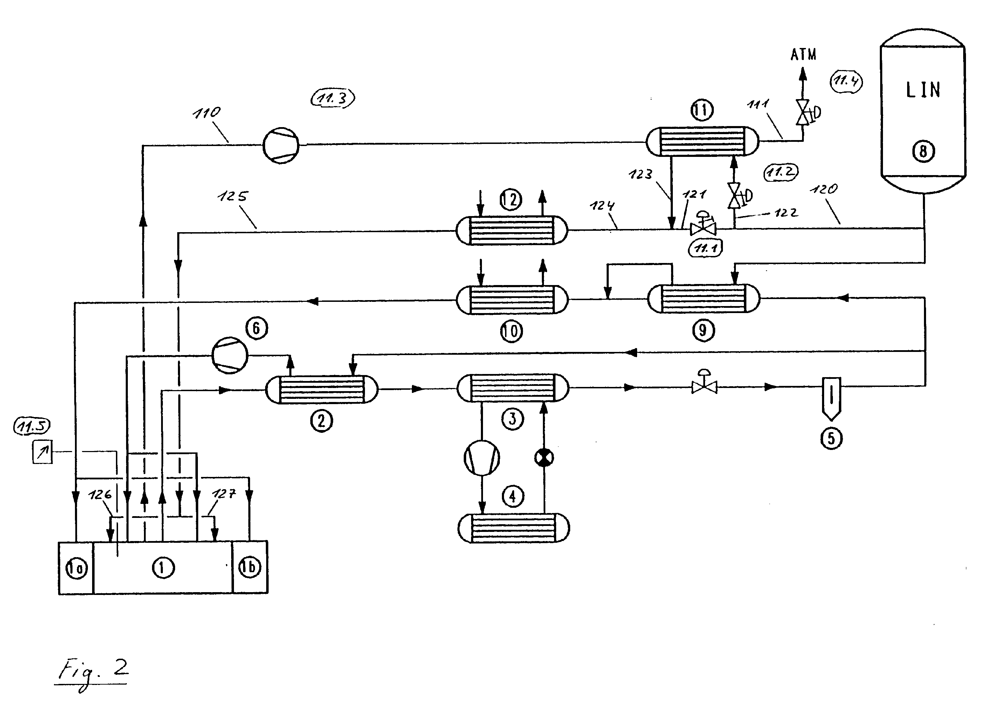

Nach dem Eintreten eines Störfalles innerhalb der Fertigungsanlage 1 wird in einer ersten Betriebsphase durch einen in Fig. 2 dargestellten Zusatzkreis über Leitungen 120, 121 und 124 einem Wärmetauscher 12 flüssiger Stickstoff in dosierter Menge aus dem Vorratsbehälter 8 der Lösungsmittelrückgewinnungsanlage zugeführt. Der Stickstoff wird verdampft und über Leitungen 125 und 126 bzw. 127 in der Nähe der Schleusen 1a, 1b in die Fertigungsanlage 1 eingeleitet.

Zur gleichen Zeit wird in etwa die gleiche Menge Stickstoff/Lösungsmittel-Gemisch über eine Leitung 110 durch einen Ventilator 11.3 aus dem Trockner abgesaugt und einem ständig in etwa auf dem Temperaturniveau von flüssigem Stickstoff befindlichen Tieftemperaturteil 11 zugeführt. Das Lösungsmittel wird auskondensiert, abgeschieden und einem Lösungsmitteltank zugeführt. Der gereinigte Stickstoff wird über eine Leitung 111 und ein Dosierventil 11.4 an die Umgebung abgegeben.

Der feindosierten Zuführung des reinen Stickstoffes bzw. der Entnahme des Gemisches kommt insbesondere beim Anlaufen des Zusatzkreises eine besondere Bedeutung zu, da die Druckverhältnisse innerhalb der Fertigungsanlage 1 nicht wesentlich verändert werden dürfen, weil sonst entweder Lösungsmittel aus den Schleusen ausbläst oder sauerstoffreiche Luft in die Schleusen und anschließend in die Anlage 1 eindringen könnte. Der Zusatzkreis muß daher besonders eng mit den anderen Kreisläufen der Lösungsmittelrückgewinnungsanlage zusammenarbeiten.

Sukzessive wird in der Zuleitung 122 das Dosierventil 11.2 geöffnet, um dem Tieftemperaturteil 11 die zur Aufrechterhaltung der tiefen Temperatur notwendige Menge flüssigen Stickstoffs zuzuleiten. Der Fluß über die Leitung 121 wird durch das Dosierventil 11.1 entsprechend geschlossen, d.h. der Stickstoff tritt jetzt bereits vorerwärmt in den Wärmetauscher 12 ein, wodurch zusätzlich die zum Verdampfen des Stickstoffs notwendige Energie vermindert werden kann. Wenn der Lösungsmittelgehalt in der Fertigungsanlage 1 auf den zulässigen Wert reduziert worden ist, wird der Zusatzkreis wieder abgeschaltet.

Um die Betriebskontinuität der Fertigungsanlage 1 weiter zu steigern, wird der Zusatzkreis auch eingesetzt, wenn der Sauerstoffgehalt in der Atmosphäre der Fertigungsanlage 1 über einen eingestellten Schwellwert steigt. Zu diesem Zweck wird ein Schwellwertgeber 11.5 in den Kreis eingeführt, der den Sauerstoffgehalt in dem Trockner 1 ständig mißt, den Zusatzkreis im Falle des Überschreitens des eingestellten Wertes einschaltet und nach Unterschreiten wieder abschaltet.

## Patentansprüche

1. Verfahren zur Vermeidung oder Verringerung von störfallbedingten Zeitverzögerungen bei der Lösungsmittelrückgewinnung aus Fertigungsprozessen, bei dem im Bedarfsfall über zumindest eine separate Zuleitung (125) der Fertigungsanlage (1) reines Trägergas zugeführt und gleichzeitig über zumindest eine separate Ableitung (110) eine Gemischmenge aus Trägergas und Lösungsmittel entzogen werden,
**dadurch gekennzeichnet**, daß
a) die Zufuhr des reinen Trägergases und das Entziehen der Gemischmenge gleichzeitig mit der Lösungsmittelrückgewinnung und gleichzeitig mit der Trägergasversorgung der Schleusen (1a, 1b) der Anlage (1) erfolgen, und daß
b) das reine Trägergas und das Gemisch jeweils dosiert in einander in etwa entsprechenden Mengen zugeführt bzw. entzogen werden.

2. Verfahren nach Anspruch 1, bei dem das über die Ableitung (110) der Fertigungsanlage (1) entzogene Gemisch aus Trägergas und Lösungmittel in einem weiteren Tieftemperaturteil (11) vom Lösungsmittel befreit wird.

3. Verfahren nach Anspruch 2, bei dem der weitere Tieftemperaturteil (11) mit dem flüssigen Trägergas als Kältemittel betrieben wird, das der Fertigungsanlage (1) über die weitere Zuleitung (125) zugeführt wird.

4. Verfahren nach Anspruch 3, bei dem das flüssige Trägergas direkt einem Vorratsbehälter (8) entnommen wird.

5. Verfahren nach Anspruch 4, bei dem dieser Vorratsbehalter (8) auch als Vorratsbehälter des Kreislaufes für die Versorgung der Schleusen (1a, 1b) mit reinem Trägergas dient.

6. Verfahren nach einem der Ansprüche 1 bis 5, bei dem das flüssige Trägergas in einem Wärmetauscher (12) erwärmt und in gasförmiger Form über die Zuleitung (125) der Fertigungsanlage (1) zugeführt wird.

7. Verfahren nach einem der Ansprüche 1 bis 6, bei dem die Zuführung des reinen Trägergases zur Fertigungsanlage (1) in der Nähe der Schleusen (1a, 1b) erfolgt.

8. Verfahren nach einem der Ansprüche 1 bis 7, bei dem das der Fertigungsanlage (1) entzogene Gemisch aus Trägergas und Lösungsmittel nach der Reinigung im Tieftemperaturteil (11) an die Umgebung abgeführt wird.

9. Verfahren nach einem der Ansprüche 2 bis 8, bei dem der weitere Tieftemperaturteil (11) während des Betriebes der Fertigungsanlage (1) ständig auf seiner Arbeitstemperatur gehalten wird.

10. Verfahren nach Anspruch 9, bei dem die Wärmeisolierung des weiteren Tieftemperaturteiles (11) und des Tieftemperaturteiles (9) des Kreislaufes für die Versorgung der Schleusen (1a, 1b) in einem gemeinsamen Gehäuse erfolgt.

11. Verfahren nach einem der Ansprüche 1 bis 10, bei dem in Verbindung mit einem Schwellwertgeber (11.5) für den Sauerstoffgehalt der Fertigungsanlage (1) deren Sauerstoffgehalt in sicherem Abstand von dem höchstzulässigen Wert gehalten wird.

12. Vorrichtung zur Vermeidung oder Verringerung von störfallbedingten Zeitverzögerungen beim Betrieb einer Anlage zur Rückgewinnung des Lösungsmittels aus einem in einer Fertigungsanlage anfallenen Gemisch aus Trägergas und Lösungsmittel,
a) mit mindestens einem Kreislauf zur Trennung des Lösungsmittels vom Trägergas und Rückführung dieses Trägergases zur Fertigungsanlage (1),
b) mit mindestens einem weiteren Kreislauf zur Versorgung der Schleusen (1a, 1b) der Anlage (1),
c) mit einer weiteren Zuleitung (125) für die Zufuhr reinen Trägergases zu der Fertigungsanlage (1), und
d) mit einer weiteren Ableitung (110) zum Entfernen einer Menge von Gemisch aus Trägergas und Lösungsmittel aus der Fertigungsanlage (1),
**dadurch gekennzeichnet,** daß
e) in der weiteren Zuleitung (125) und in der weiteren Ableitung (110) Dosierventile (11.1, 11.2, 11.4) vorgesehen sind, durch die das reine Trägergas und das Gemisch jeweils in dosierten, einander in etwa entsprechenden Mengen zuführbar bzw. entziehbar sind, und daß
f) in dem Kreislauf zur Versorgung der Schleusen (1a, 1b) ein mit dem flüssigen Trägergas aus einem Vorratsbehälter für das flüssige Trägergas als Kältemittel betriebener Tieftemperaturteil zur Reinigung des Gases zur Versorgung der Schleusen (1a, 1b) angeordnet ist.

13. Vorrichtung nach Anspruch 12, bei dem zum Reinigen des aus der Fertigungsanlage (1) entfernten Gemisches ein weiterer Tieftemperaturteil (11) vorgesehen ist, der mit dem Tieftemperaturteil (9) des Kreislaufes für die Versorgung der Schleusen (1a, 1b) in einem gemeinsamen Gehäuse zur Isolierung gegen Wärme untergebracht ist.

14. Vorrichtung nach Anspruch 12 oder 13, bei dem die Zuleitung (125) mit einem Vorratsbehälter (8) für das flüssige Trägergas in Verbindung steht.

15. Vorrichtung nach einem der Ansprüche 12 bis 14, bei dem zur Vorwärmung des der Fertigungsanlage (1) über die Zuleitung (125) zuzuführenden Trägergases ein Wärmetauscher (10) vorgesehen ist.

## Claims

1. A method for avoiding or reducing trouble-induced time delays in solvent recovery from production processes, wherein when required pure carrier gas is supplied via at least one separate supply conduit (125) to the production plant (1) and at the same time an amount of a mixture of carrier gas and solvent is withdrawn via at least one separate discharge conduit (110), characterized in that
a) the supply of the pure carrier gas and the withdrawal of the amount of the mixture occur at the same time as the solvent recovery and at the same time as the supply of the locks (1a, 1b) of the plant (1) with carrier gas, and in that
b) both the carrier gas and the mixture are supplied or withdrawn each in a metered manner in amounts corresponding essentially to each other.

2. A method according to claim 1, wherein the mixture of carrier gas and solvent withdrawn from the production plant (1) via the discharge conduit (110) is freed from solvent in a further low-temperature section (11).

3. A method according to claim 2, wherein the further low-temperature section (11) is operated with the liquid carrier gas as refrigerant which is supplied to the production plant (1) via the further supply conduit (125).

4. A method according to claim 3, wherein the liquid carrier gas is withdrawn directly from a supply container (8).

5. A method according to claim 4, wherein said supply container (8) also serves as supply container of the circuit for supplying the locks (1a, 1b) with pure carrier gas.

6. A method according to one of the claims 1 to 5, wherein the liquid carrier gas is warmed in a heat exchanger (12) and supplied to the production plant (1) in gaseous form via the supply conduit (125).

7. A method according to one of the claims 1 to 6, wherein the supply of the pure carrier gas to the production plant (1) takes place in the vicinity of the locks (1a, 1b).

8. A method according to one of the claims 1 to 7, wherein the mixture of carrier gas and solvent withdrawn from the production plant (1) is released to the environment after purification in the low-temperature section (11).

9. A method according to one of the claims 2 to 8, wherein the further low-temperature section (11) is held continuously at its operating temperature during the operation of the production plant (1).

10. A method according to claim 9, wherein the heat insulation of the further low-temperature section (11) and of the low-temperature section (9) of the circuit for supplying the locks (1a, 1b) is effected in a common housing.

11. A method according to one of the claims 1 to 10, wherein in conjunction with a threshold value pickup (11.5) for the oxygen content of the production plant (1) the oxygen content of the latter is kept at a safe distance from the highest permissible value.

12. An apparatus for avoiding or reducing trouble-induced time delays in the operation of a plant for recovering the solvent from a mixture of carrier gas and solvent resulting in a production plant, comprising
a) at least one circuit for separating the solvent from the carrier gas and returning said carrier gas to the production plant (1),
b) at least one further circuit for supplying the locks (1a, 1b) of the plant (1),
c) a further supply conduit (125) for supplying pure carrier gas to the production plant (1), and
d) a further discharge conduit (110) for removing an amount of mixture of carrier gas and solvent from the production plant (1),
characterized in that
e) in the further supply conduit (125) and in the further discharge conduit (110) metering valves (11.1, 11.2, 11.4) are provided by which both the pure carrier gas and the mixture may be supplied or withdrawn each in metered amounts corresponding esssentially to each other, and in that
f) for the purification of the gas supplying locks (1a, 1b), a low-temperature section operated with the liquid carrier gas from a supply container for said liquid carrier gas as refrigerant is arranged in the circuit for supplying the locks (1a, 1b).

13. An apparatus according to claim 12, wherein for purifying the mixture removed from the production plant (1) a further low-temperature section (11) is provided which is accomodated with the low-temperature section (9) of the circuit for supplying the locks (1a, 1b) in a common housing for insulation against heat.

14. An apparatus according to claim 12 or 13, wherein the supply conduit (125) is in communication with a supply container (8) for the liquid carrier gas.

15. An apparatus according to one of the claims 12 to 14, wherein for preheating the carrier gas to be supplied to the production plant (1) via the supply conduit (125) a heat exchanger (10) is provided.

## Revendications

1. Procédé pour éviter ou réduire les retards imputables à des pannes ou perturbations lors de la récupération de solvants dans les opérations de production ou de fabrication, procédé dans lequel en cas de besoin on amène par au moins une conduite d'amenée séparée (125) de l'installation de fabrication (1) un gaz porteur pur et en prélevant simultanément par l'intermédiaire d'au moins une conduite d'évacuation séparée (110) une quantité de mélange constitué par du gaz porteur et un solvant,
caractérisé en ce que
a) l'amenée du gaz porteur pur et le prélèvement du volume de mélange s'effectuent simultanément avec la récupération du solvant et simultanément avec l'alimentation en gaz porteur des sas (1a, 1b) de l'installation (1) et en ce que
b) le gaz porteur pur et le mélange sont amenés et/ou prélevés à chaque fois de façon dosée dans des quantités sensiblement correspondantes l'un par rapport à l'autre.

2. Procédé selon la revendication 1, dans lequel le mélange prélevé par l'intermédiaire de la conduite d'évacuation (110) de l'installation de production (1) est libéré du gaz porteur et du solvant dans une partie basse température supplémentaire (11) du solvant.

3. Procédé selon la revendication 2, dans lequel la partie basse température supplémentaire (11) est actionnée avec le gaz porteur liquide en tant que produit réfrigérant, qui est amené à l'installation de production (1) par l'intermédiaire de la conduite d'amenée supplémentaire (125).

4. Procédé selon la revendication 3, dans lequel le gaz porteur liquide est prélevé directement d'un réservoir de stockage (8).

5. Procédé selon la revendication 4, dans lequel le réservoir de stockage (8) sert également de réservoir de stockage de circulation pour l'alimentation en gaz porteur pur des sas (1a, 1b).

6. Procédé selon l'une des revendications 1 à 5, dans lequel le gaz porteur liquide est chauffé dans un échangeur de chaleur (12) et il est amené sous la forme gazeuse par l'intermédiaire de la conduite d'amenée (125) à l'installation de production (1).

7. Procédé selon l'une des revendications 1 à 6, dans lequel l'amenée du gaz porteur pur à l'installation de production (1) s'effectue à proximité des sas (1a, 1b).

8. Procédé selon l'une des revendications 1 à 7, dans lequel le mélange prélevé de l'installation de production (1) à partir du gaz porteur et du solvant est évacué après purification dans la partie basse température (11) dans l'environnement.

9. Procédé selon l'une des revendications 2 à 8, dans lequel la partie basse température supplémentaire (11) est constamment maintenue à sa température de travail pendant le fonctionnement de l'installation de production (1).

10. Procédé selon la revendication 9, dans lequel l'isolation thermique de la partie basse température supplémentaire (11) et de la partie basse température (9) de la circulation pour l'alimentation des sas (1a, 1b) s'effectue dans une enceinte commune.

11. Procédé selon l'une des revendications 1 à 10, dans lequel en liaison avec un indicateur de valeur de seuil (11.5) pour la teneur en oxygène de l'installation de production (1), cette teneur en oxygène est maintenue à une distance de sécurité par rapport à la valeur maximale admissible.

12. Dispositif pour éviter ou réduire les retards imputables à des pannes ou perturbations lors du fonctionnement d'une installation pour la récupération de solvants à partir d'un mélange de gaz porteur et de solvant produit dans l'installation de fabrication,
a) avec au moins une circulation pour la séparation du solvant de gaz porteur et le retour du gaz porteur vers l'installation de production (1),
b) avec au moins une circulation supplémentaire pour l'alimentation des sas (1a, 1b) de l'installation (1),
c) avec une conduite d'amenée supplémentaire (125) pour l'amenée d'un gaz porteur pur à destination de l'installation de fabrication (1), et
d) avec une conduite d'évacuation supplémentaire (110) pour l'élimination d'un volume de mélange de gaz porteur et de solvant provenant de l'installation de production (1)
caractérisé en ce que
e) dans la conduite d'amenée supplémentaire (125) et dans la conduite d'évacuation supplémentaire (110) sont prévues des vannes de dosage (11.1, 11.2, 11.4) à travers lesquelles on peut amener ou prélever à chaque fois de façon dosée le gaz porteur pur et le mélange dans des volumes correspondants sensiblement entre eux, et
f) dans la circulation pour l'alimentation des sas (1a, 1b) est agencée une partie basse température fonctionnant comme moyen réfrigérant avec le gaz porteur liquide provenant du réservoir de stockage pour le gaz porteur liquide pour la purification du gaz destiné à alimenter les sas (1a, 1b).

13. Dispositif selon la revendication 12, dans lequel pour la purification du mélange évacué de l'installation de production (1), il est prévu une partie basse température supplémentaire (11) qui est logée avec la partie basse température (9) de la circulation pour l'alimentation des sas (1a, 1b) dans une enceinte commune en vue de l'isolation vis-à-vis de la chaleur.

14. Dispositif selon la revendication 12 ou 13, dans lequel la conduite d'amenée (125) est en communication avec un réservoir de stockage (8) pour le gaz porteur liquide.

15. Dispositif selon l'une des revendications 12 à 14, dans lequel pour le préchauffage du gaz porteur amené à l'installation de production (1) par l'intermédiaire de la conduite d'amenée (125), il est prévu un échangeur de chaleur (10).
